# EUROPEAN PATENT APPLICATION

(11) **EP 0 714 938 A2**
(43) Date of publication of application: **05.06.1996**
(21) Application number: 95203270.4
(22) Date of filing: 28.11.1995
(51) Int. Cl.: C08L 23/08, C08K 5/00, C08K 3/00

(54) **Polyketone stabilization**

(30) Priority: 29.11.1994 US 346109
(71) Applicant: SHELL INTERNATIONALE RESEARCH MAATSCHAPPIJ B.V., NL-2596 HR Den Haag (NL)
(72) Inventor: Ash, Carlton Edwin, Sugar Land, Texas 77479 (US)

(57) **Abstract**

The thermal oxidative stability of polyketone polymers is improved by combining a major amount of linear alternating polyketone polymer and a minor amount of a primary antioxidant, a secondary antioxidant, and a scavenger.

## Description

The present invention relates to stabilized compositions comprising a major amount of linear alternating polyketone polymers.

Polymers of carbon monoxide and olefins generally referred to as polyketones are well known in the art. The class of linear alternating polymers of carbon monoxide and at least one ethylenically unsaturated hydrocarbon are of particular interest among polyketone polymers. This class of polymers is disclosed in numerous patent specifications exemplified by US-A-4,880,865 and US-A-4,818,811.

Although the properties of polyketone polymers are suitable for many applications, linear alternating polymers of carbon monoxide and at least one ethylenically unsaturated hydrocarbon can exhibit a deterioration of physical properties upon thermal oxidative degradation. This degradation is due to a chemical attack of atmospheric oxygen on the polymer chains and is characteristic of most, if not all, organic polymers. Oxidation is typically autocatalytic and occurs as a function of heat and oxygen (hence the term thermal oxidative degradation).

It is desirable to inhibit the deterioration of polymer properties by stabilizing the polymer toward the adverse effects of heat and oxygen. There are a large number of thermal oxidative stabilizers which are employed commercially to stabilize thermoplastic polymers against such degradation. However, many of the thermal stabilizers which are known to be effective with polyolefins, polyamides, polyacetals, polyacrylates, etc. are only marginally effective when employed with polyketone polymers. Indeed, many have a prodegradative effect or no effect at all.

Organic polymers are commonly stabilized toward thermal oxidation using additives known in the art as primary antioxidants or chain-breaking donors. These primary antioxidants include, for example, hindered phenols which generally function as hydrogen atom donors in the conversion of peroxy radical oxidation intermediates to nonradical hydroperoxides. Since hydroperoxides can decompose to form new initiating radicals for oxidation, combining primary antioxidants with some secondary antioxidants such as phosphites and sulphides has been used in polymer systems such as polyolefins. The secondary antioxidants are capable of removing hydroperoxides. Thus, in such systems, the combination of primary and secondary antioxidants can be synergistic.

With respect to polyketones, it has been found that certain antioxidants contribute to improved thermal oxidative stability. However, the addition of secondary antioxidants such as phosphites or phosphonites has little or no stabilizing influence. Indeed, such an addition is frequently accompanied by rapid colour development and embrittlement which are indicators of a prodegradative influence.

Phosphite and phosphonite additives, alone or in combination with a hindered phenol, have been shown to have some effect in reducing the oxidation of polyketone model compounds, yet significant portions of these compounds convert to furan species with the concomitant hydrolysis of the phosph(on)ite additive. Such reactions are undesirable because they degrade the polyketone structure and consume the potential phosph(on)ite antioxidant additive. These unwanted reactions actually may feed on one another. Thus, as the phosph(on)ite additives undergo hydrolysis they may produce phosphorous based acids which catalyze the formation of furans in alternating ketones. One molecule of water is produced from each furanization reaction which, in turn, hydrolyzes more phosph(on)ite additive making alternating polyketones unresponsive to the use of such secondary antioxidants.

Surprisingly, it has now been found that linear alternating polyketone polymers are stabilized by a combination of a primary antioxidant, a secondary antioxidant and a scavenger.

The present invention relates to a stabilized composition comprising a major amount of an alternating polyketone polymer of carbon monoxide and at least one ethylenically unsaturated hydrocarbon, a minor amount of a primary antioxidant which interrupts radical propagation, a minor amount of a secondary antioxidant selected from the group consisting of phosphites, phosphonites and mixtures thereof, and a minor amount of a scavenger, with the proviso that the scavenger is not solely a metal salt of a fatty acid. Further, the present invention relates to a process for producing a stabilized composition comprising alternating polyketone polymer of carbon monoxide and at least one ethylenically unsaturated hydrocarbon comprising contacting the polymer with a primary antioxidant which interrupts radical propagation, a secondary antioxidant selected from the group consisting of phosphites, phosphonites and mixtures thereof, and a scavenger which scavenger is not solely a metal salt of a fatty acid, and recovering said stabilized polyketone polymer composition. As used throughout this specification, "polyketones" are alternating polymers of carbon monoxide and at least one ethylenically unsaturated hydrocarbon. The term "polyketone" also refers to copolymers and terpolymers.

The materials useful in practicing this invention include polyketone polymer, a primary antioxidant, a secondary antioxidant, and a scavenger. As used throughout this specification, a scavenger is a substance which removes or neutralizes free or bound water and/or acid or acidic components. Other polymer additives well known in the art can also be used in conjunction with polyketones thus prepared. For instance, fillers, extenders, lubricants, pigments, plasticizers, and other polymeric materials can be added to the polyketone compositions being stabilized to improve or otherwise alter the properties of the compositions.

The polyketone polymers which are employed as the major component of the oxidatively stabilized polymer composition of the invention are of a linear alternating structure and contain substantially one molecule of carbon monoxide for each molecule of ethylenically unsaturated hydrocarbon. It will be clear that "the major amount" means more than 50% by weight of the total amount of stabilized composition. Preferably more than 75% by weight of polyketone is present, based on amount of stabilized composition. The preferred polyketone polymers are copolymers of carbon monoxide and ethylene or terpolymers of carbon monoxide, ethylene and a second ethylenically unsaturated hydrocarbon of at least 3 carbon atoms, particularly an α-olefin such as propylene.

When the preferred polyketone terpolymers are employed as the major polymeric component of the blends of the invention, there will be within the terpolymer at least 2 units incorporating a moiety of ethylene for each unit incorporating a moiety of the second hydrocarbon. Preferably, there will be from 10 units to 100 units incorporating a moiety of the second hydrocarbon. The polymer chain of the preferred polyketone polymers is therefore represented by the repeating formula

⁅CO(̵CH₂-CH₂)̵⁆ₓ⁅CO(̵G)̵⁆_{y}

where G is the moiety of ethylenically unsaturated hydrocarbon of at least 3 carbon atoms polymerized through the ethylenic unsaturation and the ratio of y:x is no more than 0.5. When copolymers of carbon monoxide and ethylene are employed in the compositions of the invention, there will be no second hydrocarbon present and the copolymers are represented by the above formula wherein y is zero. When y is other than zero, i.e. terpolymers are employed, the units and the -CO(-CH₂-H₂)- units and the -CO(-G)- units are found randomly throughout the polymer chain, and preferred ratios of y:x are from 0.01 to 0.1. The precise nature of the end groups does not appear to influence the properties of the polymer to any considerable extent so that the polymers are fairly represented by the formula for the polymer chains as depicted above.

The polyketone polymers of number average molecular weight from 1000 to 200,000, particularly those of number average molecular weight from 20,000 to 90,000 as determined by gel permeation chromatography are of particular interest. The physical properties of the polymer will depend in part upon the molecular weight, whether the polymer is a copolymer or a terpolymer, and in the case of terpolymers the nature of the proportion of the second hydrocarbon present. Typical melting points for the polymers are from 175 °C to 300 °C, more typically from 210 °C to 270 °C. The polymers have a limiting viscosity number (LVN), measured in m-cresol at 60 °C in a standard capillary viscosity measuring device, from 0.5 dl/g to 10 dl/g, more frequently from 0.8 dl/g to 4 dl/g.

Preferred methods for the production of the polyketone polymers have been described in US-A-4,808,699 and US-A-4,868,282. US-A-4,808,699 teaches the production of linear alternating polymers by contacting ethylene and carbon monoxide in the presence of a catalyst comprising a Group VII metal compound, an anion of a nonhydrohalogenic acid with a pKa less than 6 and a bidentate phosphorous, arsenic or antimony ligand. US-A-4,868,282 teaches the production of linear random terpolymers by contacting carbon monoxide and ethylene in the presence of one or more hydrocarbons having an olefinically unsaturated group with a similar catalyst.

Without being bound to theory, it is believed that the thermal oxidative process involves the formation of oxygenates which under aging conditions cleave polymer chains and result in a reduction of molecular weight and a loss of polymer chain entanglement. Ultimately this results in a deterioration of polymer mechanical properties such as reduced strength, loss of ductility, and embrittlement. Stabilizing the polyketone polymers towards these property losses has been addressed through the reduction of the overall rate of oxidation and/or through a reduction in the rate of polymer chain scission.

It has been found that the use of secondary antioxidants thus far found to be of little stabilizing effect or prodegradative effect can made to impart a stabilizing influence by the simultaneous employment of a scavenger. That is, the combination of primary antioxidant such as a hindered phenol, secondary antioxidant such as phosphites and phosphonites, and scavenger produce a polyketone polymer with significantly improved thermal oxidative stability. This stability far exceeds that achieved through the addition of primary antioxidant alone or primary antioxidant in combination with a secondary antioxidant.

It is the addition of a scavenger to the combination of primary and secondary antioxidants which improves the oxidative stabilization of the polyketone. Again, without being bound by theory it is believed that this combination retards the phosphite hydrolysis and furanization of the polymer thereby allowing for more complete oxidative stabilization. The term "minor amount" is used to indicate that these compounds are present in an amount of less than 50% by weight, based on total amount of stabilized composition. Preferably, each of these compounds is present in an amount of less than 20% by weight, based on amount of polyketone.

Scavengers useful in the stabilization of polyketones according to this invention may be organic or inorganic compounds. These include metal oxides such as ZnO, CaO, and Al₂O₃; metal hydroxides such as Mg(OH)₂, Ca(OH)₂, and Al(OH)₂; metal carbonates such as CaCO₃ and MgCO₃; metal sulphides such as CdS and ZnS; metal alkoxides or aryloxides such as Ti(OCH₃)₄ and Ti(OC₆H₅)₄; metal sulfates such as CaSO₄ and MgSO₄; metal phosphates such as Ca₃(PO₄)₂ and LaPO₄; metal nitrides such as AlN and Zn₃N₂; metal silicates or zeolites/molecular seives such as Mg₂Si₃O₈ and M_{2/n}.Al₂O₃.xSiO₂.yH₂O; organic ketimines such as benzophenone anil; organic carbodiimides such as "STABOXIL I" and "STABOXIL P" (trademarks of the Rhein Chemical Company); alkyl, aryl, or alkylaryl amines such as "TINUVIN 622" and "CHEMISORB 119" (trademarks of the Ciba Geigy Corporation) and mixtures of the above such as ZnCO₃.2Zn(OH)₂.H₂O, hydrotalcite (Al₂O₃.6MgO.CO₂.xH₂O), and the mixture known as "ULTRACARB" (a trademark of Aluchem, Inc.) comprising Mg₃Ca(CO₃)₄ and Mg₄(CO₃)₃(OH)₂.3H₂O. Metal oxides, metal hydroxides, metal carbonates, organic carboximides and complex mixtures such as "ULTRACARB" are preferred. The most preferred scavenger is Mg(OH)₂ sold commercially under the trade mark "MAGNIFIN" by Lonza Inc.

Interestingly, metal salts of fatty acids such as calcium stearate, an acid scavenger used in the stabilization of polypropylene, is not useful in the process of this invention. This is thought to be attributable to the extraordinarily different role played by the scavenger with respect to the two polymers. In the case of polypropylene, the acid scavenger polices up harsh acids produced by the catalyst residue. In the instant invention, the scavenger controls the ill effects of phosphite hydrolyzation and retards furanization.

Useful primary antioxidants are sterically hindered phenols having the formula: 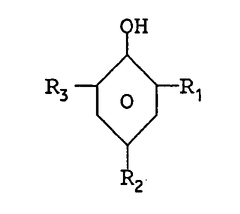
wherein R₁, R₂, and R₃ each represents the same or different alkyl or aralkyl group having from one to 30 carbon atoms wherein the alkyl group may be aliphatic or cyclic. However, any substance which interrupts radical propagation such as an aromatic amine may be useful in this capacity. Preferably, the primary antioxidant is a hindered phenol.

Examples of suitable primary antioxidants include those described in US-A-3,819,410. Preferred primary antioxidants include 1,3,5-trimethyl-2,4,6-tris-(3,5-di-tert-butyl-4-hydroxybenzyl) benzene sold commercially as "IRGANOX 1330" by Ciba-Geigy, Inc., N,N'-hexanediyl bis(3,5-di-tert-butyl-4-hydroxybenzenepropanamide) sold commercially as "IRGANOX 1098" by Ciba-Geigy, Inc., and ethylene bis(oxyethylene)bis-(3-tert-butyl-4-hydroxy-5-methylhydrocinnamate) sold commercially as "IRGANOX 245" by Ciba-Geigy, Inc. "IRGANOX 1098" is the most preferred primary antioxidant.

Secondary antioxidants useful in this invention include phosphites and phoshonites having the formula: 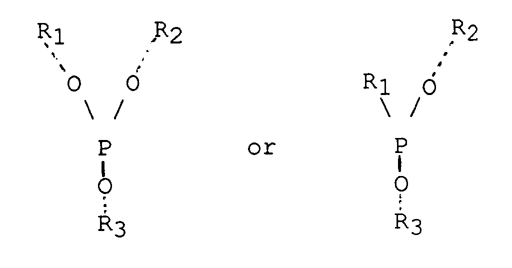
wherein at least one of the R groups is H or alkyl or aryl substituent of up to and including 20 carbon atoms and the other R groups are the same or different groups having the same definition. Preferred secondary antioxidants include tris(2,4-di-tert-butylphenyl)-phosphite sold commercially as "IRGAFOS 168" by Ciba-Geigy, Inc., triphenylphosphite sold commercially as "WESTON TPP" by GE Specialty Chemicals, Inc., diphenylphosphite sold commercially as "Weston DPP" by GE Specialty Chemicals, and bis(2,4-di-tert-butylphenyl)-pentaerythritol diphosphonite sold commercially as "ULTRANOX 627" by GE Specialty Chemicals, Inc. "IRGAFOS 168" is the most preferred secondary antioxidant.

Preferably, the stabilized composition according to the present invention comprises a primary antioxidant which is selected from the group consisting of hindered phenols, aromatic amines and mixtures thereof, the secondary antioxidant is selected from the group consisting of phosphites, phosphonites and mixtures thereof, and the scavenger is selected from the group consisting of metal oxides, metal hydroxides, metal carbonates, metal alkoxide, aryloxides, metal phosphates, metal sulphides, metal sulfates, metal nitrides, metal silicates, organic ketimines, organic carbodiimides, amines, and mixtures thereof. A further preferred composition is a composition wherein the primary antioxidant is a hindered phenol, the secondary antioxidant is a phosphite and/or a phosphonite, and the scavenger is Mg(OH)₂ and/or an organic carbodiimide.

Broadly speaking, the process of the invention involves dispersing a sufficient amount of primary antioxidant, secondary antioxidant, and scavenger into polyketone polymer to improve the thermal oxidative stability of the polymer. Preferred amounts of these components are between 0.01 and 5 wt% (based on weight of polyketone) of primary antioxidant, 0.01 and 5 wt% (based on the weight of polyketone) secondary antioxidant and between 0.01 and 5 wt% of scavenger (based on the weight of polyketone) are useful to achieve good thermal oxidative stability of the polymer. It is more preferred that these quantities be between 0.05 and 2 wt% based on weight of polyketone. It is most preferred that each antioxidant be present in a quantity of between 0.1 to 1 wt% and scavenger be between 0.1 to 2 wt% based on weight of polyketone. These quantities of the various components comprise a small amount of the ultimate material relative to the amount of polymer.

The primary antioxidant, secondary antioxidant, and scavenger may be incorporated into the polyketone polymer at any stage of its processing, preferably prior to being subjected to elevated temperature and exposure to oxygen. The method of incorporating the primary antioxidant, secondary antioxidant, and scavenger is not considered to be critical so long as the method results in a substantially uniform blend of the composition components. Such methods include melt compounding after contacting the primary antioxidant, secondary antioxidant, and scavenger with polyketone polymer using techniques such as powder mixing and/or solvent deposition.

After preparation, the now stabilized polyketone polymers show improved retention of desired mechanical properties, such as resistance to embrittlement when tested under conditions of elevated temperature and air exposure. The test as disclosed in US-A-4,994,511 subjects polymer samples to aerobic oven aging at various temperatures and monitors the time until brittle failure (cracking) occurs when sharply bent at an angle of 180°.

The following nonlimiting examples and tables further illustrate the invention. In each example, weight percent is on the basis of the weight of polymer or model compound unless otherwise indicated.

### Example 1

3,6,9-Undecanetrione (UDT) was used to model the oxidative activity of the polyketones of this invention. 0.25 gram of UDT were added to a 30 ml stainless steel closed vessel in the presence of pure oxygen and/or additives described as follows.

Sample A was UDT without any additives. Sample B was UDT plus 0.9 wt% "IRGANOX 1076" (octadecyl 3-(3,5-di-tert.butyl-4-hydroxyphenyl)propanoate, trademark of the Ciba-Geigy Corporation). Sample C was plus 0.9 wt% triphenylphosphite. Sample D was UDT plus 0.45 wt% "IRGANOX 1076" plus 0.45 wt% triphenylphosphite. Sample E was UDT plus 0.45 wt%. "IRGANOX 1076" plus 0.45 wt% triphenylphosphite plus 0.2 wt% dihydrotalcite (Al₂O₃.6MgO.CO₂.2H₂O).

0.25 grams of each of the respective mixtures was then oxidized in pure oxygen at 100 °C with an initial charge of 1.10 bar O₂ at 23 °C. Oxygen consumption was measured via O₂ pressure drop. The mixtures were aged over the course of 240 hours at 100 °C.

The aged mixtures were then dissolved in CD₂Cl₂ and subjected to H¹ and C¹³ NMR analysis using a Bruker AMX 400 spectrometer. Mole% products were based upon initial total moles of UDT. Results are shown in Table 1.

**Table 1**

| SAMPLE | OXYGEN CONSUMPTION (240 HOURS) | OXIDATION PRODUCTS (mole%) | Furan (mole %) |
|---|---|---|---|
| A | 46% | 30.3 | 1.8 |
| B | 43% | 16.8 | 1.0 |
| C | 10% | 7.5 | 3.5 |
| D | 2% | 1.5 | 1.1 |
| E | 4% | 0 | 0 |

This example shows that the addition of a secondary antioxidant to a primary antioxidant reduces oxygen consumption but it also increases furan production. This is a prodegradative reaction producing water in the heat aging of the polyketone. The addition of a scavenger eliminated phosphite hydrolysis, furan formation, and inhibited all oxidation products.

### Example 2

Samples of neat linear polyketone according to this invention (a terpolymer of Carbon monoxide, ethylene, and a minor amount of propylene having a melting point, MP, of 220 °C and a limiting viscosity number, LVN, of 1.8 dl/g) and mixtures of such polyketones with various additives were subjected to an oven aging test.

Samples were prepared by admixing 100 grams of polyketone polymer powder with respective additives under a nitrogen atmosphere. The powders were homogonized and then extruded under nitrogen in a 15 mm Baker-Perkins twin screw extruder operating with a melt temperature of about 250 °C. The extruded polymer compounds were then compression molded into 0.5 x 10⁻³ m (20 mil) thick plaques and cut into 1 cm wide strips. Test specimens were then placed into forced air circulating ovens at 125 °C. Periodically, the strips were withdrawn from the oven and bent to a 180-degree angle after they cooled. Failure is said to occur when the samples became sufficiently brittle to crack or break under this test procedure and the time to embrittlement was then recorded.

Results are reported in Table 2 below.

**Table 2**

| SAMPLE | A* | B* | C* | D | E | F | G |
|---|---|---|---|---|---|---|---|
| DAYS TO EMBRITTLEMENT | 15 | 25 | 24 | 35 | 33 | 35 | 33 |
| Sample A- Neat linear alternating polyketone prepared from ethylene and carbon monoxide. Sample B- Sample A + 0.5 wt% of "IRGANOX 245" (ethylene bis(oxyethylene)bis-(3-tert.butyl-4-hydroxy-5-methylhydrocinnamate), sold commercially by Ciba Geigy) Sample C- Sample A + 0.5 wt% of "IRGANOX 245" + 0.2 wt% of "IRGAFOS 168" (tris(2,4-di-tert.butylphenyl)phosphite, sold commercially by Ciba Geigy) + 0.2 wt% CaStearate. Sample D- Sample A + 0.5 wt% of "IRGANOX 245" + 0.2 wt% of "IRGAFOS 168" + 0.2 wt% Mg(OH)₂. Sample E- Sample A + 0.5 wt% of "IRGANOX 245" + 0.2 wt% of "IRGAFOS 168" + 0.2 wt% CaCO₃. Sample F- Sample A + 0.5 wt% of "IRGANOX 245" + 0.2 wt% of "IRGAFOS 168" + 0.2 wt% "STABOXIL P-100" (an aromatic polycarbodiimide sold under this trademark by Rhein Chemie). Sample G- Sample A + 0.5 wt% of "IRGANOX 245" + 0.2 wt% of "IRGAFOS 168" + 0.2 wt% ZnO. | | | | | | | |

| | | | | | | | |
|---|---|---|---|---|---|---|---|
| *-Comparative, not according to the invention. | | | | | | | |

This example shows that the oxidative stability of the polymer is improved when scavenger is added to polymer with primary and secondary antioxidant.

### Example 3

The procedure of Example 2 was also used in this Example.

Results are shown in Table 3 below.

**Table 3**

| SAMPLE | H | I | J | K | L |
|---|---|---|---|---|---|
| DAYS TO EMBRITTLEMENT | 27* | 36 | 30 | 36 | 46 |
| Sample H- Neat linear alternating polyketone prepared from ethylene and carbon monoxide + 0.25 wt% of "IRGANOX 245". Sample I- Sample H + 0.2% wt "MAGNIFIN"(Mg(OH)₂, sold by Lonza Inc.) + 0.15 wt% "IRGAFOS 168". Sample J- Sample H + 0.2 wt% "MAGNIFIN" + 0.15 wt% "ULTRANOX 627" (a phosphonite sold under this trade mark by G.E. Specialty Chemicals, Inc.) Sample K- Sample H + 0.2 wt% "MAGNIFIN" + 0.07 wt% triphenylphosphite sold as "WESTON TPP". Sample L- Linear polyketone terpolymer + 0.25 wt% of "IRGANOX 1098" (N,N'-1,6-hexanediyl bis[3,5-bis(1,1-dimethylethyl)-4-hydroxybenzenepropanamide], sold by Ciba Geigy) + 0.15 wt% of "IRGAFOS 168" + 0.2 wt% "MAGNIFIN". | | | | | |

| | | | | | |
|---|---|---|---|---|---|
| *-Comparative, not according to the invention. | | | | | |

### Example 4

Sample L of Example 3 was analyzed using Gel Permeation Chromatography in a ZORBAX 1000 instrument with 60 PSM in series and a WATERS 110 differential refractometer as detector.

Sample L had an initial Mw of 182,000 before heat aging. After 43 days at 125 °C, Sample L had a Mw of 158,800. The sample was completely soluble in HFIPA both before and after aging.

This example illustrates that the polyketones according to this invention were stabilized with retention of molecular weight during aging. Solubility in HFIPA indicates that the Sample prepared according to this invention retained its linear character and did not significantly crosslink during heat aging.

### Example 5

Example 4 was repeated for Sample H of Example 3. The sample was found to have an initial weight average molecular weight (Mw) of 182,000 prior to heat aging. After 43 days at 125 °C, Sample H had a Mw of 112,200 and displayed an insoluble fraction in HFIPA (approx. 10%).

### Example 6

Samples of neat linear polyketone according to this invention (terpolymer of ethylene, carbon monoxide, and a minor amount of propylene, MP=220 °C, LVN=1.8 dl/g) and mixtures of such polyketones with various additives were subjected to an oven aging test.

Samples were prepared by admixing 100 g virgin polyketone polymer powder with respective additives identified below under a dry nitrogen atmosphere. The powder mixtures were homogenized and then melt extruded under nitrogen on a 15 mm Baker Perkins twin screw extruder operated with a melt temperature of about 250 °C. The polymer melt was collected in air at a rate sufficient to form a continuous strand of nominally 1.5 mm thickness.

In this test, 1.5 mm thick extruded polymer strands were aged in a forced air Blue M oven at 135 °C. At various time intervals, samples were removed and after cooling to 23 °C at 50% relative humidity the samples were measured for tensile strength using an Instron extensometer operated at a crosshead speed of 0.01 m/sec (0.5 in/sec). In this test, stabilizers could be ranked according to their stabilizing influence by a maintenance of high strength during heat aging. Retention of tensile strength in excess of 612 x 10⁵ Pa (9,000 psi) at 600 hours/135 °C and 544 x 10⁵ Pa (8,000 psi) at 739 hours/135 °C is desired. Results are reported in Table 4 below.

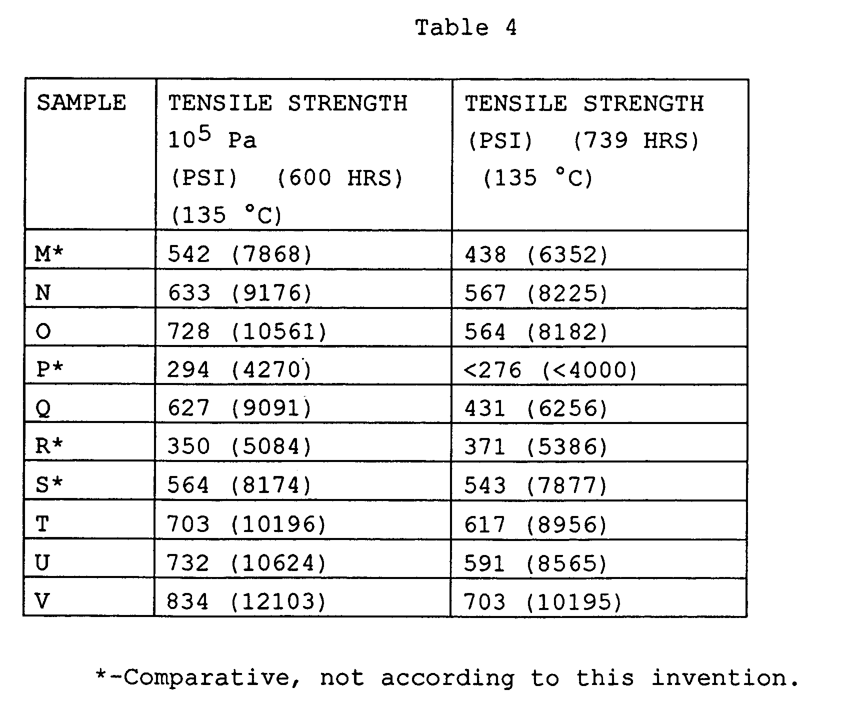

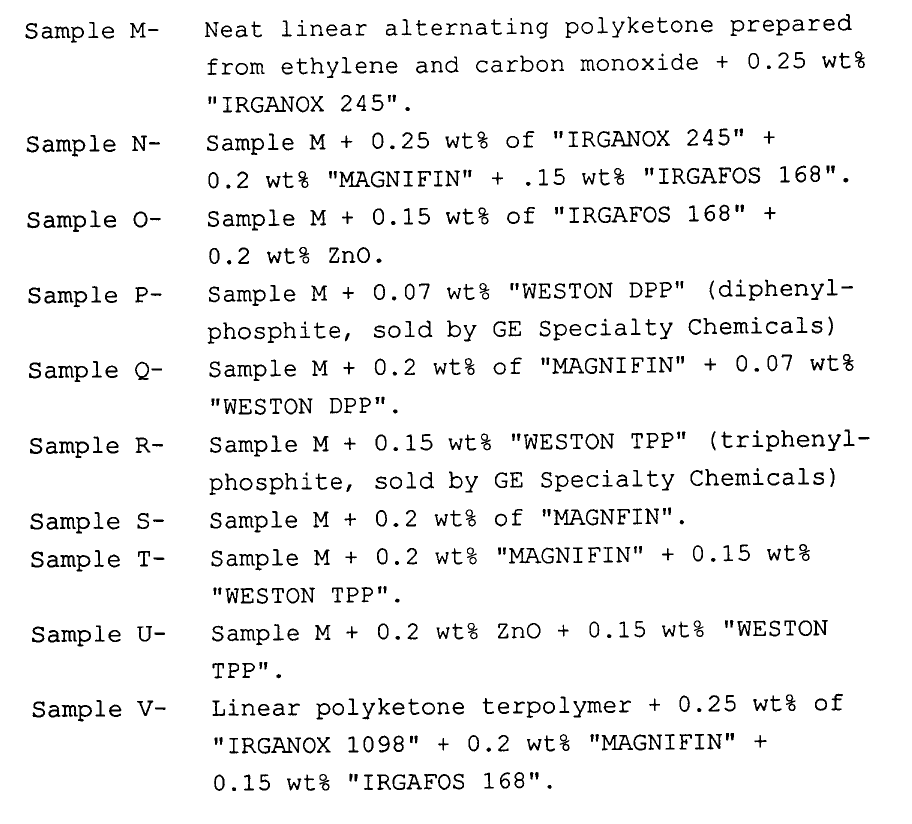

## Claims

1. Stabilized composition comprising a major amount of an alternating polyketone polymer of carbon monoxide and at least one ethylenically unsaturated hydrocarbon, a minor amount of a primary antioxidant which interrupts radical propagation, a minor amount of a secondary antioxidant selected from the group consisting of phosphites, phosphonites and mixtures thereof, and a minor amount of a scavenger, with the proviso that the scavenger is not solely a metal salt of a fatty acid.

2. Composition according to claim 1, wherein the primary antioxidant is selected from the group consisting of hindered phenols, aromatic amines and mixtures thereof, the secondary antioxidant is selected from the group consisting of phosphites, phosphonites and mixtures thereof, and the scavenger is selected from the group consisting of metal oxides, metal hydroxides, metal carbonates, metal alkoxide, aryloxides, metal phosphates, metal sulphides, metal sulfates, metal nitrides, metal silicates, organic ketimines, organic carbodiimides, amines, and mixtures thereof.

3. Composition according to claim 2, wherein the primary antioxidant is a hindered phenol.

4. Composition according to any one of claims 1-3, wherein the primary antioxidant is N,N'-1,6-hexanediyl bis[3,5-bis(1,1-dimethylethyl)-4-hydroxy-benzenepropanamide].

5. Composition according to any one of claims 1-4, wherein the secondary antioxidant is tris(2,4-di-tert-butylphenyl)phosphite.

6. Composition according to any one of claims 1-5, wherein the primary antioxidant is a hindered phenol, the secondary antioxidant is a phosphite and/or a phosphonite, and the scavenger is Mg(OH)₂ and/or an organic carbodiimide.

7. Composition according to any one of claims 1-6, wherein the primary antioxidant is present in an amount of from 0.01 to 5 wt%, based on the weight of polyketone the secondary antioxidant is present in an amount of from 0.01 to 5 wt% based on the weight of polyketone, and the scavenger is present in an amount of from 0.01 to 5 wt% based on the weight of polyketone.

8. Composition according to claim 7, wherein the primary antioxidant is present in an amount of from 0.05 to 2 wt%, based on the weight of polyketone, the secondary antioxidant is present in an amount of from 0.05 to 2 wt% based on the weight of polyketone, and the scavenger is present in an amount of from 0.05 to 2 wt% based on the weight of polyketone.

9. A process for producing a stabilized composition comprising alternating polyketone polymer of carbon monoxide and at least one ethylenically unsaturated hydrocarbon comprising contacting the polymer with a primary antioxidant which interrupts radical propagation, a secondary antioxidant selected from the group consisting of phosphites, phosphonites and mixtures thereof, and a scavenger, which scavenger is not solely a metal salt of a fatty acid, and recovering said stabilized polyketone polymer composition.
